(19) **Europäisches Patentamt**
**European Patent Office**
**Office européen des brevets**

(11) Numéro de publication : **0 353 107 B1**

# (12) FASCICULE DE BREVET EUROPEEN

(45) Date de publication du fascicule du brevet :
07.08.91 Bulletin 91/32

(51) Int. Cl.⁵ : **B60S 3/04, A47L 1/08, A47L 1/16**

(21) Numéro de dépôt : 89401555.1

(22) Date de dépôt : 06.06.89

(54) **Dispositif de nettoyage à fonctions multiples en particulier pour glaces de véhicules et objets analogues.**

(30) Priorité : 25.07.88 FR 8810006

(43) Date de publication de la demande :
31.01.90 Bulletin 90/05

(45) Mention de la délivrance du brevet :
07.08.91 Bulletin 91/32

(84) Etats contractants désignés :
AT BE CH DE ES GB GR IT LI LU NL SE

(56) Documents cités :
CH-A- 635 741
DE-A- 1 655 689
DE-A- 2 324 438
DE-U- 8 421 074
DE-U- 8 607 042

(56) Documents cités :
FR-A- 2 408 486
GB-A- 1 160 995
US-A- 2 832 980
US-A- 2 997 732
US-A- 4 719 660

(73) Titulaire : **Billat, Alain Edouard**
**49 Avenue de Gouvieux**
**F-60260 Lamorlaye (FR)**

(72) Inventeur : **Billat, Alain Edouard**
**49 Avenue de Gouvieux**
**F-60260 Lamorlaye (FR)**

(74) Mandataire : **Madeuf, René Louis et al**
**Cabinet Madeuf Conseils en Propriété**
**Industrielle 3, Avenue Bugeaud**
**F-75116 Paris (FR)**

# Description

La présente invention concerne un nouveau dispositif de nettoyage à fonctions multiples utilisable en particulier lorsqu'il y a lieu de nettoyer des vitres d'un véhicule quelle que soit la nature des souillures de ces vitres, c'est-à-dire que le dispositif permet un essuyage, un brossage suivi d'un essuyage et éventuellement un raclage si la vitre est recouverte de givre ou d'insectes.

Le dispositif de l'invention rend, en outre, possible de traiter la vitre par exemple d'appliquer un produit de dégivrage, un produit mouillant empêchant l'eau de pluie de se former en gouttes ou un produit de désembuage ou tous autres produits pouvant s'avérer utiles.

La conception du dispositif de l'invention fait qu'il est de réalisation simple et bon marché à partir d'un nombre restreint de pièces pouvant toutes être réalisées par moulage en matière plastique. La disposition des organes qui composent le dispositif permet en outre de changer éventuellement celles des parties du dispositif qui peuvent être usées après un long usage.

On connaît déjà par le document GB-A-1160995 de réaliser un dispositif de nettoyage à fonctions multiples, en particulier pour des glaces de véhicule, comprenant une tête sur une partie de laquelle est disposée une lame d'essuyage, ladite tête étant portée par une poignée comprenant un produit de traitement pouvant être projeté par l'actionnement d'une gâchette ce dispositif comprenant en outre un corps spongieux.

Le dispositif de nettoyage à fonctions multiples conforme à l'invention, en particulier pour des glaces de véhicule, est caractérisé en ce que la tête supporte sur son dessous ce corps spongieux fixe destiné au brossage de la pièce à nettoyer et est munie d'un étrier comportant au moins une nervure de raclage, l'actionnement de la gâchette projetant le produit de traitement directement sur la pièce à nettoyer.

Des modes particuliers de réalisation de l'invention sont précisés dans les revendications dépendantes 2 à 10.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une perspective du dispositif de nettoyage à fonctions multiples de l'invention.

La fig. 2 est une perspective éclatée faisant apparaître les pièces principales constitutives du dispositif de la fig. 1.

La fig. 3 est une élévation latérale correspondant à la fig 1.

La fig. 4 est une coupe transversale vue suivant la ligne IV-IV. de la fig. 2 d'une des pièces du dispositif de l'invention.

La fig. 5 est une coupe partielle de la tête du dispositif des figures précédentes.

La fig. 6 est une perspective schématique, partie en coupe, illustrant un détail de réalisation.

La fig. 7 est une coupe longitudinale schématique faisant ressortir une caractéristique de fonctionnement du dispositif de l'invention.

Le dispositif de l'invention illustré au dessin comporte une tête 1 à partir de laquelle est formée une poignée 2 en dessous de laquelle se trouve une gâchette 3.

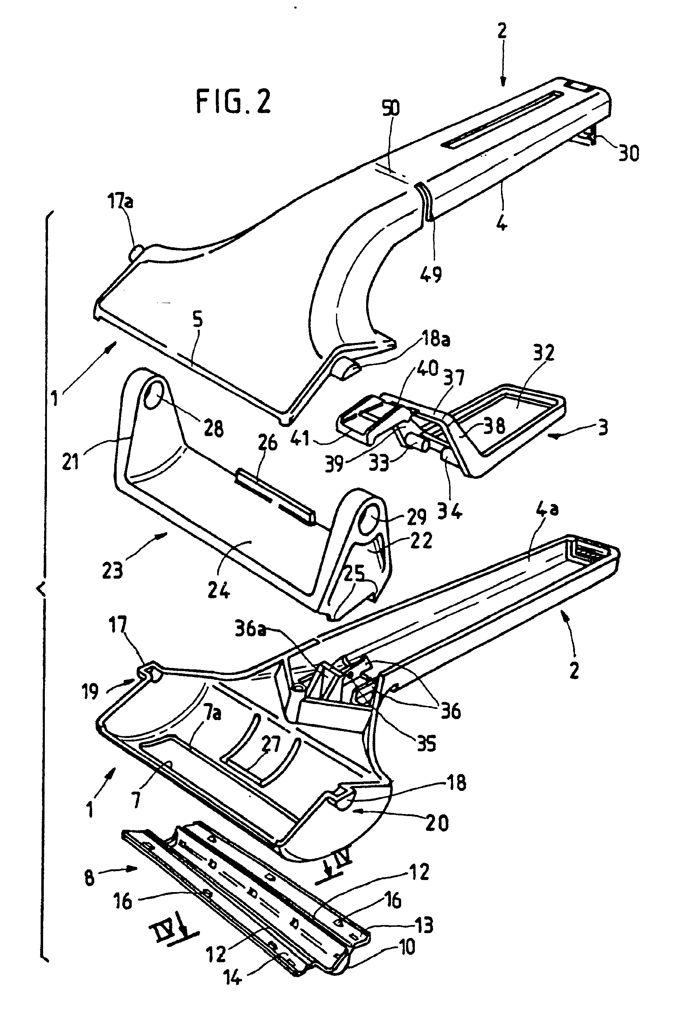

La fig 2 montre que la tête 1 et la poignée 2 sont avantageusement réalisées par deux demi-coquilles complémentaires 4, 4a pouvant facilement être moulées en matière plastique en même temps qu'un certain nombre d'organes qu'elles doivent comporter intérieurement.

Les demi-coquilles 4, 4a délimitent, à la partie antérieure de la tête, une saignée 5 dans laquelle est encastrée une lame souple d'essuyage 6 réalisée par exemple en élastomère.

La partie antérieure de la tête 1 délimitée par la demi-coquille 4a présente une lumière 7, bien visible à la fig. 2, dans laquelle est emboîté un support 8 pour un corps spongieux 9 devant faire saillie de ladite tête 1.

Le support 8 est réalisé avantageusement comme illustré par les fig. 2, 4 et 5. Il comporte une partie médiane 10 en forme de U dans les branches latérales 10a de laquelle sont prévues des ouvertures 11. L'extrémité des branches latérales 10a présente des amincissements 12 pour constituer des charnières à partir desquelles s'étendent des ailes 13, 14 présentant chacune une rainure longitudinale 15. Des picots 16 sont en outre prévus dans les ailes 13, 14. Certains au moins de ces picots sont alignés avec des ouvertures 11 des branches latérales 10a.

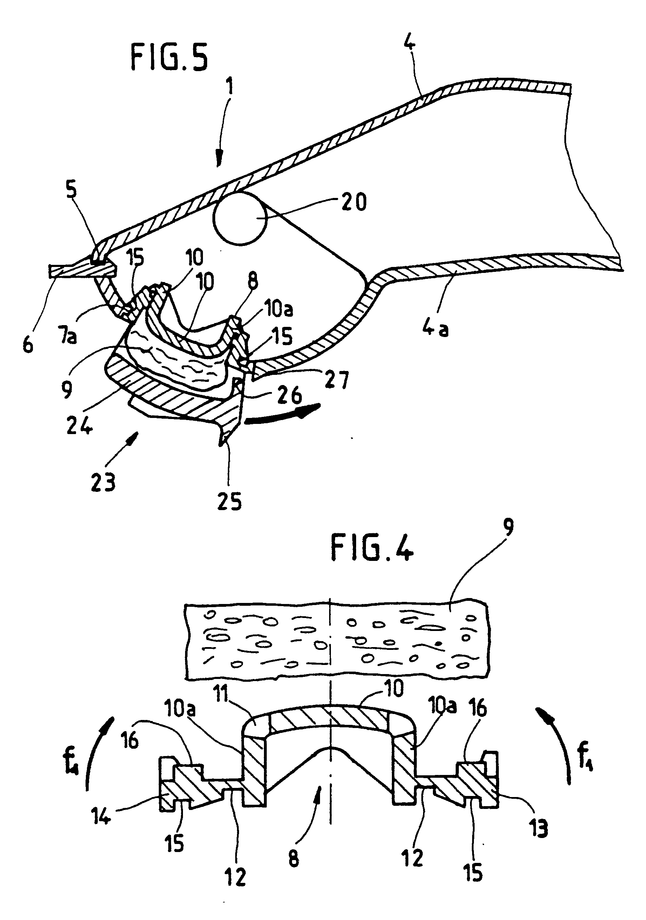

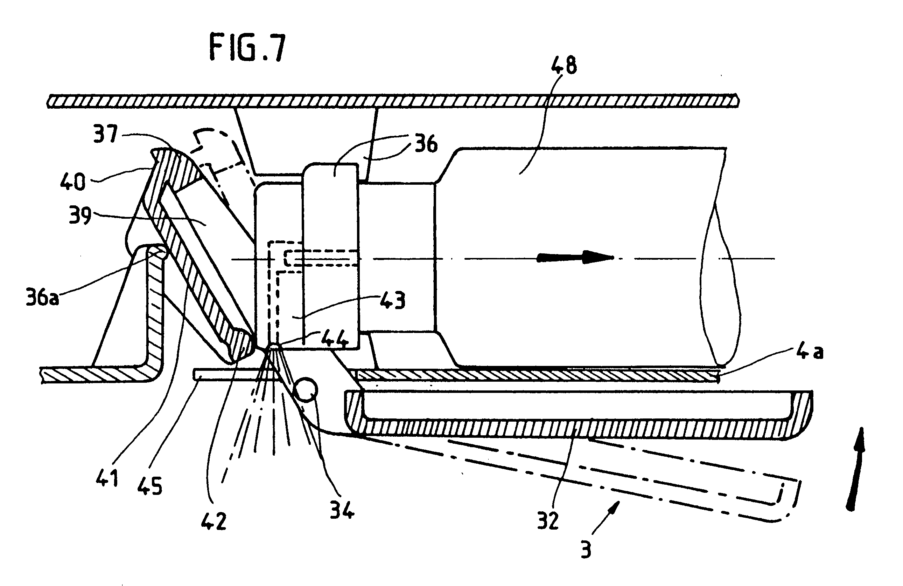

Lors du montage, le corps spongieux 9 est appliqué sur le dessus bombé de la partie médiane 10 en U puis les ailes 13, 14 sont repliées suivant les flèches $f_1$, fig. 4, pour emprisonner une partie du bord latéral du corps spongieux 9 et le pincer entre lesdites ailes 13, 14 et les branches latérales 10a. En fin de pivotement des ailes 12, 13, les picots 16 traversent une partie du corps spongieux 9 et sont verrouillés dans les ouvertures 11. Ce mode de fixation du corps spongieux a pour effet de le faire bomber au-dessus de la partie médiane 10. Les ailes 13, 14 sont alors engagées dans la lumière 7 de la partie de la demi-coquille 4a qui délimite la tête 1, ce qui est illustré par les fig. 2 et 5 qui montrent que les bords 7a de ladite lumière 7 sont introduits dans les rainures longitudinales 15 du support 8 qui se trouve ainsi encliqueté.

La fig. 2 montre que chacune des demi-coquilles 4, 4a délimite sur les côtés latéraux de la tête 1 des bossages 17, 17a et 18, 18a qui sont respectivement complémentaires pour former des axes 19, 20 lorsque les deux demi-coquilles sont assemblées.

Le verrouillage des bossages 17, 17a, 18, 18a pour fermer les axes 19, 20 est assuré par les branches 21, 22 d'un étrier 23 dont le fond 24 est arqué et présente au moins une nervure 25 s'étendant de l'une à l'autre branche 21, 22.

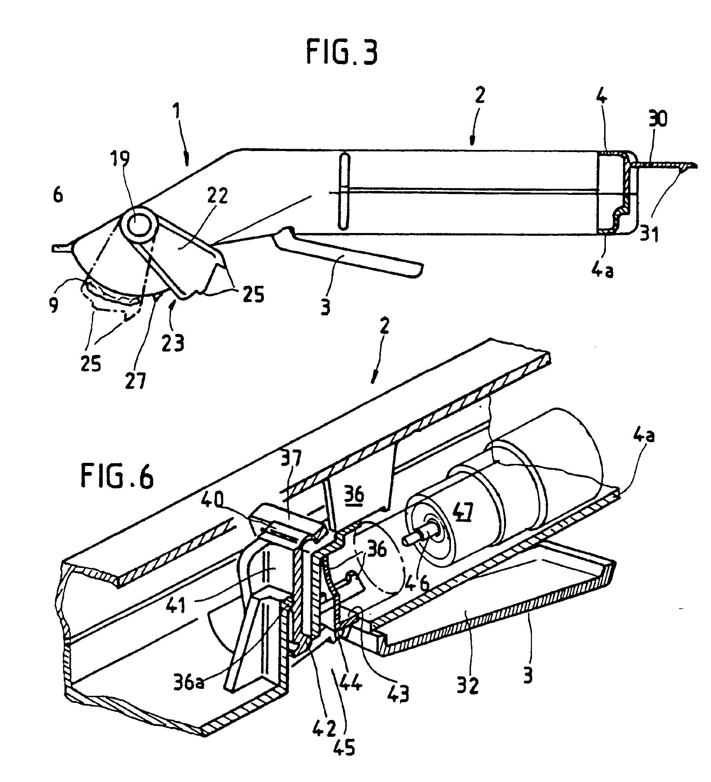

Le fond 24 présente aussi une butée 26 pouvant être déformée élastiquement et qui est destinée à coopérer avec une saillie ou languette 27 de la demi-coquille 4a pour immobiliser l'étrier 23 dans une position pour laquelle son fond 24 recouvre le corps spongieux 9, ce qui est illustré par la fig. 5 et aussi en traits mixtes à la fig. 3.

Les branches 21, 22 de l'étrier présentent des trous 28, 29 et elles sont déformables élastiquement de manière que les bossages 17, 17a et 18, 18a, lorsqu'ils sont assemblés pour former les axes 19, 20, puissent y être engagés pour verrouiller ensemble les deux demi-coquilles 4, 4a tout en permettant le pivotement de l'étrier.

Les fig. 2 et 3 montrent que l'une des demi-coquilles, par exemple la demi-coquille 4, forme à l'extrémité de sa poignée 2 un volet pivotant 30 comprenant une saillie de verrouillage 31 pour assurer sa fixation avec l'autre demi-coquille, en l'occurrence la demi-coquille 4a.

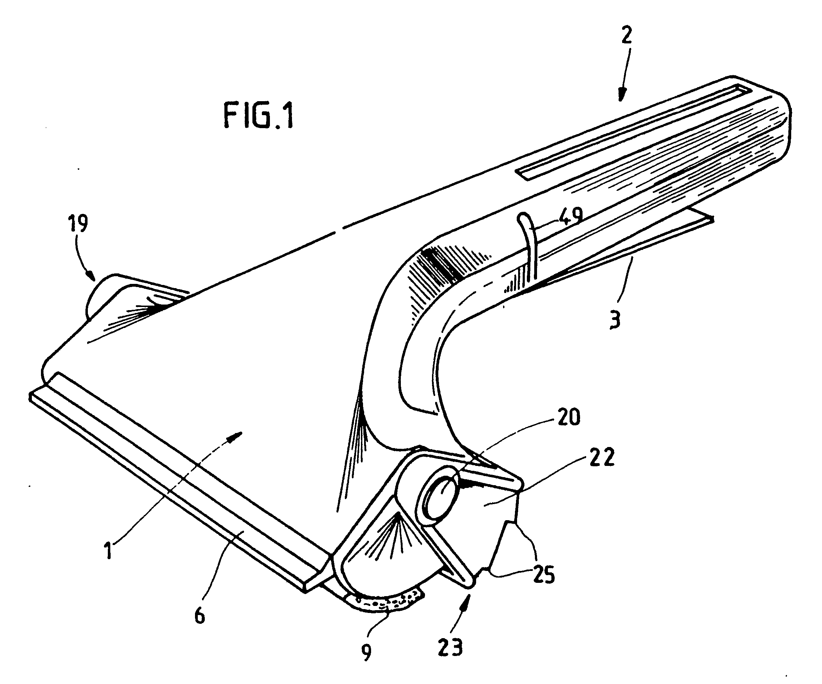

La mesure dont fait saillie la butée 26 pouvant être déformée est choisie pour que cette butée frotte contre la surface arquée de la partie de la demi-coquille 4a constituant en partie la tête 1, de sorte que l'étrier 23 puisse être maintenu immobile par friction dans la position illustrée aux fig. 1 et 3 en traits pleins lorsque cet étrier et les nervures 25 qu'il comporte n'ont pas à être utilisés.

L'étrier 23 est réalisé en matière plastique, mais de préférence d'une dureté suffisante pour que la ou les nervures 25 puissent constituer un grattoir, en particulier pour que ces nervures puissent permettre le dégivrage d'une glace telle qu'un pare-brise.

La fig. 2 montre que la gâchette 3 comporte une partie de manoeuvre 32 à une extrémité de laquelle sont formés des axes 33, 34, dirigés l'un vers l'autre et destinés à être engagés, par déformation élastique, dans des trous 35 dont un seul apparaît au dessin, qui sont prévus dans des longerons d'un berceau 36.

La gâchette 3 forme, à partir de l'extrémité des axes 33, 34, une chape 37 à bras inclinés 38, 39. La chape 37 sert à l'articulation, par un axe 40 qui peut, le cas échéant, être réalisé par une partie amincie comme cela est représenté d'un culbuteur 41 prenant appui contre une butée 36a du berceau 36, ce qui est clairement illustré par les fig. 6 et 7.

L'extrémité libre du culbuteur 41 forme un bourrelet d'appui 42 pour l'actionnement d'une bague 43 déplaçable axialement mais non en rotation qui est guidée dans le berceau 36 et qui comporte une buse de pulvérisation 44, fig. 7, disposée en regard d'une lumière 45 de la demi-coquille 4a, fig. 6. La bague de pulvérisation 43 est destinée à contenir la tête mobile 46 d'un pulvérisateur 47 monté sur un flacon 48 contenant un produit de nettoyage de dégivrage de désembuage ou pouvant remplir une fonction analogue.

Le flacon 48 est contenu dans la poignée 2.

Pour permettre le remplissage facile du flacon 48, il est avantageux que l'une des demi-coquilles, par exemple la demi-coquille 4, présente des découpes latérales et que son dessus soit aminci comme figuré en 50 à la fig. 2 pour constituer un volet pivotant donnant accès à l'intérieur de la poignée.

La fig. 7 montre qu'en actionnant la gâchette 3 depuis la position pour laquelle elle est illustrée en traits mixtes jusqu'à la position pour laquelle elle est illustrée en traits pleins, cela a pour effet de la faire pivoter autour des axes 34, 33 et, par conséquent, la chape 37 pivote également depuis la position illustrée en traits mixtes jusqu'à la position illustrée en traits pleins. Ce mouvement a pour effet de faire glisser le culbuteur 41 contre la butée 36a de sorte qu'il bascule en exerçant par le bourrelet d'appui 42a une pression sur la bague de pulvérisation 43, ce qui provoque le fonctionnement du pulvérisateur.

Comme cela ressort de ce qui précède, le dispositif permet, lorsqu'il se trouve dans la position illustrée à la fig. 3, de nettoyer une vitre en pulvérisant tout d'abord un produit de nettoyage par des pressions successives exercées sur la gâchette 3. Ensuite, le liquide projeté est étalé et la glace frottée par le corps spongieux 9 puis finalement la glace est essuyée au moyen de la lame souple 6.

Lorsque le dispositif doit être rangé, il est possible de protéger le corps spongieux 9 contre la poussière en amenant au-dessus de ce corps le fond 24 de l'étrier 23.

Dans la position pour laquelle le fond 24 de l'étrier 23 recouvre le corps spongieux 9, c'est-à-dire la position illustrée par la fig. 5, l'étrier est maintenu en place, d'une part, par le corps spongieux et, d'autre part, par la butée déformable 26 prenant appui contre la saillie ou languette 27, ce qui est illustré par la fig. 5. Dans cette position, l'étrier peut également servir comme grattoir, par exemple pour du givre, en utilisant la ou les nervures 25 qu'il comporte. Lorsque plusieurs nervures 25 sont prévues, il est avantageux qu'au moins l'une d'elles forme des dents de scie, ce qui facilite le décollage du givre.

**Revendications**

1. Dispositif de nettoyage à fonctions multiples en particulier pour des glaces de véhicule comprenant une tête (1) sur une partie de laquelle est disposée une lame d'essuyage (6), ladite tête étant portée par une poignée (2) contenant un produit de traitement pouvant être projeté par l'actionnement d'une gâchette (3) ce dispositif comprenant en outre un corps spongieux (9), caractérisé en ce que la tête (1) supporte sur son dessous ce corps spongieux fixe (9) destiné au brossage de la pièce à nettoyer et est munie d'un étrier (23) comportant au moins une nervure de raclage (25), l'actionnement de la gâchette projetant directement le produit de traitement sur la pièce à nettoyer.

2. Dispositif suivant la revendication 1, caractérisé en ce que l'étrier (23) est monté pivotant sur la tête (1) entre une position active de raclage de la pièce à nettoyer, dans laquelle le corps spongieux (9) est recouvert, et une position inactive laissant à découvert le corps spongieux (9).

3. Dispositif suivant l'une des revendications 1 ou 2, caractérisé en ce que la tête (1) et la poignée (2) sont réalisées par l'assemblage de deux demi-coquilles complémentaires (4, 4a) dont l'une forme un berceau (36) te retenue d'un pulvérisateur (43, 46, 47) fermant un flacon (48) contenu dans la poignée (2).

4. Dispositif suivant l'une des revendications 1 à 3, caractérisé en ce que la gâchette est articulée dans la poignée et est reliée à un culbuteur (41) comportant un bourrelet d'appui (42) pour l'actionnement par poussée de la tête (43, 46) du pulvérisateur.

5. Dispositif suivant l'une des revendications 1 à 4 caractérisé en ce que l'une des demi-coquilles (4a) délimite dans la partie constitutive de la tête une lumière (7) dont des bords (7a) forment une retenue pour un support (8) d'un corps spongieux (9).

6. Dispositif suivant l'une des revendications 1 à 5, caractérisé en ce que le support (8) du corps spongieux (9) comporte une partie médiane (10) sensiblement en forme de U dont les branches latérales (10a) sont reliées par des charnières (12) à des ailes (13, 14) formant des picots coopérant avec des ouvertures (11) pour la fixation dudit corps spongieux (9).

7. Dispositif suivant l'une quelconque des revendications 1 à 6 caractérisé en ce que les parties des demi-coquilles (4, 4a) formant la tête (1) délimitent des bossages complémentaires (17, 17a, 18, 18a) pour constituer des axes (19, 20), engagés dans des trous (28, 29) prévus dans les branches (21, 22) de l'étrier (23) qui est pivotant en même temps qu'il forme verrou pour les demi-coquilles.

8. Dispositif suivant l'une des revendications 1 à 7, caractérisé en ce que le fond (24) de l'étrier (23) est muni d'une butée (26) pouvant être déformée pour coopérer avec une saillie ou languette (27) d'immobilisation dans une position pour laquelle la nervure de raclage (25) saillant en dessous du fond (24) est utilisable pour le décollage du givre, le fond de l'étrier formant en outre protecteur pour le corps spongieux (9).

9. Dispositif suivant l'une des revendications 1 à 8, caractérisé en ce que l'une des demi-coquilles présente une partie articulée pour l'ouverture de la poignée.

10. Dispositif suivant l'une des revendications 1 à 9, caractérisé par un volet pivotant (30) porté par l'une des demi-coquilles constitutives de la poignée (2) et assurant leur verrouillage.

## Patentansprüche

1. Mehrzweck-Reinigungsvorrichtung insbesonders für Fahrzeugfenster, die einen Kopf (1) umfaßt, an dessen einem Teil ein Wischblatt (6) vorgesehen ist, wobei besagter Kopf von einem Griffstück (2) getragen wird, das ein Behandlungsmittel enthält, welches durch Betätigung eines Hebels (3) herausgespritzt werden kann, und die außerdem einen Schwammkörper (9) umfaßt, dadurch gekennzeichnet, daß der Kopf (1) an der Unterseite diesen befestigten Schwammkörper (9) trägt, dazu bestimmt, das zu reinigende Teil abzureiben, und mit einem Bügel (23) versehen ist, der mindestens eine Schabrippe (25) umfaßt, wobei die Betätigung des Hebels das Behandlungsmittel direkt auf das zu reinigende Teil aufspritzt.

2. Vorrichtung nach Anspruch 1, dadurch gekennzeichnet, daß der Bügel (23) schwenkbar an dem Kopf (1) angebracht ist, und zwar schwenkbar zwischen einer aktiven Position für das Abschaben des zu reinigenden Teils, in der der Schwammkörper (9) verdeckt ist, und einer inaktiven Position, die den Schwammkörper (9) freiliegend lässt.

3. Vorrichtung nach einem der Ansprüche 1 oder 2, dadurch gekennzeichnet, daß der Kopf (1) und das Griffstück (2) durch das Zusammensetzen von zwei einander ergänzenden Halbschalen (4, 4a) entstehen, von denen die eine eine Halterung (36) zum Halten eines Zerstäubers (43, 46, 47) bildet, der eine in dem Griffstück 2 enthaltene Flasche (48) verschließt.

4. Vorrichtung nach einem der Ansprüche 1 bis 3, dadurch gekennzeichnet, daß der Hebel in dem Griff angelenkt ist und mit einem Kipphebel 41 verbunden ist, der einen Auflagewulst 42 für die Betätigung des Zerstäuberkopfes (43, 46) mittels Axialdrucks besitzt.

5. Vorrichtung nach einem der Ansprüche 1 bis 4, dadurch gekennzeichnet, daß eine der Halbschalen (4a) in dem den Kopf bildenden Teil ein Fenster (7) aufweist, dessen Ränder 7a eine Halterung für einen Träger (8) eines Schwammkörpers (9) bilden.

6. Vorrichtung nach einem der Ansprüche 1 bis 5, dadurch gekennzeichnet, daß der Träger (8) des Schwammkörpers (9) einen im wesentlichen U-förmigen Mittelteil (10) besitzt, dessen seitliche Abschnitte (10a) durch Scharniere (12) mit flügeln (13, 14) verbunden sind, welche Zähne ausbilden, die mit Öffnungen (11) für die Befestigung besagten Schwammkörpers (9) zusammenwirken.

7. Vorrichtung nach einem der Ansprüche 1 bis 6, dadurch gekennzeichnet, daß die den Kopf (1) bildenden Teile der Halbschalen (4, 4a) komplementäre Halbzapfen (17, 17a, 18, 18a) zur Bildung von Achsen (19, 20) umfassen, welche in Bohrungen (28, 29) eingeführt sind, die an den Armen (21, 22) des Bügels (23) vorgesehen sind, der schwenkbar ist und zugleich eine Verriegelung für die Halbschalen darstellt.

8. Vorrichtung nach einem der Ansprüche 1 bis 7, dadurch gekennzeichnet, daß der Boden (24) des Bügels (23) mit einem verformbaren Anschlag (26) versehen ist, dazu vorgesehen, mit einem Vorsprung oder einer Zunge (27) zusammenzuwirken, die dem Festhalten in einer Position dient, in der die Schabrippe (25), welche an der Unterseite des Bodens (24) hervorspringt, zum Ablösen des Eises verwendet wird, wobei der Boden des Bügels außerdem eine Schutzvorrichtung für den Schwammörper (9) bildet.

9. Vorrichtung nach einem der Ansprüche 1 bis 8, dadurch gekennzeichnet, daß eine der Halbschalen einen angelenkten Teil für die Öffnung des Griffstücks aufweist.

10. Vorrichtung nach einem der Ansprüche 1 bis 9, durch eine schwenkbare Verschlußklappe (30) gekennzeichnet, die von einer der Halbschalen, die das Griffstück (2) bilden, getragen wird und die deren Zusammenschluß gewährleistet.

## Claims

1. Multi-purpose cleaning device, in particular for vehicle windows, comprising a head (1) on a portion of which is placed a wiping blade (6), said head being carried by a handle (2) containing a treatment product able to be projected by actuating a trigger (3), this device further comprising a spongy body (9), characterized in that the head (1) carries, on its bottom, this fixed spongy body (9) provided for rubbing the part to be cleaned and is provided with a stirrup (23) comprising at least one scraping rib (25), the actuating of the trigger directly projecting the treatment product on the part to be cleaned.

2. Device according to claim 1, characterized in that the stirrup (23) is pivotally mounted on the head (1) between an active position for scraping the part to be cleaned, in which the spongy body (9) is covered, and an inactive position letting uncovered the spongy body (9).

3. Device according to one of claims 1 or 2, characterized in that the head (1) and handle (2) are made by assembling two complementary half-shells (4, 4a), of which one forms a cradle (36) for housing a sprayer (43, 46, 47) closing a flask (48) housed inside said handle (2).

4. Device according to one of claims 1 to 3, characterized in that the trigger is articulated in the handle and is connected to a rocker member (41) comprising a support flange (42) for the push activation of the head (43, 46) of the sprayer.

5. Device according to one of claims 1 to 4, characterized in that one of the half-shells (4a) defines, in the portion forming the head, an aperture (7) having edges (7a) which form a retaining device for a support (8) of the spongy body (9).

6. Device according to one of claims 1 to 5, characterized in that the support (8) of the spongy body (9) comprises a substantially U-shaped median portion (10) having side branches (10a) which are connected by hinges (12) to wings (13, 14) forming studs cooperating with openings (11) for the fixation of said spongy body (9).

7. Device according to one of claims 1 to 6, characterized in that the portions of the half-shells (4, 4a) forming the head (1) define complementary bosses (17, 17a, 18, 18a) for forming pivot pins (19, 20), engaged inside holes (28, 29) provided in the branches (21, 22) of the stirrup (23) which is pivoting while forming at a same time a latch for the half-shells.

8. Device according to one of claims 1 to 7, characterized in that the bottom (21) of the stirrup (23) is provided with an abutment (26) which may be deformed for cooperating with an immobilization protrusion or small tongue (27) in a position for which the scraping rib (25) protruding below the bottom (24) is usable for a loosening of frost, the bottom of the stirrup forming moreover a protective member for the spongy body (9).

9. Device according to one of claims 1 to 8, characterized in that one of the half-shells has an articulated portion for opening the handle.

10. Device according to one of claims 1 to 9, characterized by a pivoting flap (30) carried by one of the half-shells forming the handle (2) and ensuring their latching.

FIG.1

# FIG. 2

FIG.3

FIG.6

# FIG.5

# FIG.4

# FIG.7

EP 0 353 107 B1